# EUROPEAN PATENT SPECIFICATION

(11) **EP 1 732 402 B1**
(45) Date of publication and mention of the grant of the patent: **22.08.2012**
(21) Application number: 05700757.7
(22) Date of filing: 05.01.2005
(51) Int. Cl.: A23L 1/212, A23L 1/308, A23L 1/24, A23L 2/02, A23L 2/52

(54) **KETCHUP WITH FIBERS**
KETCHUP MIT BALLASTSTOFFEN
KETCHUP COMPRENANT DES FIBRES

(30) Priority: 02.02.2004 US 770242
(43) Date of publication of application: 20.12.2006
(73) Proprietor: Unilever N.V., 3013 AL Rotterdam (NL); Unilever PLC, London EC4Y 0DY (GB)
(72) Inventor: AQUINO, Leonardo Jose Sanchez, Englewood Cliffs, New Jersey 07632 (US)
(74) Representative: Rosen Jacobson, Frans Lucas M.
(86) International application number: PCT/EP2005/000106
(87) International publication number: WO 2005/074713

(56) References cited:
- EP-A- 0 251 163
- EP-A- 0 440 586
- EP-A- 0 736 262
- WO-A-91/19423
- US-A- 5 108 774
- US-A- 5 490 997
- US-A- 5 567 424
- US-A1- 2003 224 100
- US-A1- 2004 081 741
- PATENT ABSTRACTS OF JAPAN vol. 1998, no. 02, 30 January 1998 (1998-01-30) & JP 09 278664 A (KIRIN BREWERY CO LTD), 28 October 1997 (1997-10-28)
- "NEW APPLICATIONS FOR PECTINS" FOOD TECH EUROPE, 1 March 1996 (1996-03-01), pages 32-34, XP000198349 ISSN: 0969-0581
- PATENT ABSTRACTS OF JAPAN vol. 018, no. 501 (C-1251), 20 September 1994 (1994-09-20) & JP 06 169708 A (POKKA CORP), 21 June 1994 (1994-06-21)
- FIGUEROLA F ET AL: "Fibre concentrates from apple pomace and citrus peel as potential fibre sources for food enrichment" FOOD CHEMISTRY, ELSEVIER SCIENCE PUBLISHERS LTD, GB, vol. 91, no. 3, July 2005 (2005-07), pages 395-401, XP004692958 ISSN: 0308-8146
- ENGELBRECHT J: "Der Einsatz von Ballaststoffen in Alkoholfreien Getränken." CEREVISIA AND BIOTECHNOLOGY, vol. 16, no. 2, 1991, page 47, XP009046674

## Description

### FIELD OF THE INVENTION

The present invention is directed to a tomato ketchup comprising insoluble, and optionally, soluble fibers. The tomato ketchup is suitable to be substantially free or free of carbohydrates, and surprisingly, free of synersis. Moreover, the tomato ketchup of the present invention can be homogenized to produce an end product displacing excellent taste and rheological properties, even at elevated temperatures. Such a tomato ketchup also has the added benefit of delivering the often needed fiber to diets without adversely impacting the flavor, texture and/or appearance of the same.

### BACKGROUND OF THE INVENTION

In our modern society, regardless of age, people are more concerned about their weight than ever. Particularly, many individuals believe that diets high in protein and low in carbohydrates are good not only for weight management, but also overall health.

Studies show that diets, like the well-known Atkins' diet (promoting the intake of higher amounts of protein and fat in the diet in order to offset the decreased intake of carbohydrates), can produce a greater weight less than conventional low carbohydrate and high fat diets. Moreover, such high protein and high fat diets are often also associated with a greater improvement in some risk factors associated with coronary heart disease.

Surprisingly, condiments and sauces, for example, can account for a significant amount of carbohydrates in a meal, even if the base of the meal is a steak or fish or other noncarbohydrate source.

In view of the above, there is a need to develop food compositions that are low in carbohydrates while at the same time, good tasting. This invention, therefore, is directed to a tomato ketchup that comprises insoluble fibers, and optionally, soluble fibers whereby the tomato ketchup is substantially free or free of carbohydrates, and surprisingly free of syneresis. Such a tomato ketchup also has the added benefit cf providing fiber to diets without adversely impacting the flavor, texture and/or appearance of the same.

### ADDITIONAL INFORMATION

Efforts have been disclosed for making drinks with fibers. In U.S. Application 2003/0064104 A1, fiber-water for use with specific dietary applications is described.

Other efforts have been disclosed for making fiber-containing food and beverage products. In U.S. Application No. 2003/0228393 A1, food and beverage products comprising a gas carrying an aromatic smell and a solid phase with an insoluble plant fiber are described.

Still other efforts have been disclosed for delivering fiber. In U.S. Patent No. 6,455,068, chewable tablets having soluble dietary fibers are disclosed.

None of the additional information above describes a food composition comprising insoluble, and optionally, soluble fibers whereby the food composition is, among other things, substantially free or free of carbohydrates yet able tc display excellent rheological properties, even at elevated temperatures.

### SUMMARY OF THE INVENTION

In a first aspect, the present invention is directed to a tomato ketchup comprising less than 20% by weight carbohydrate, said ketchup comprising:
(a) from 0.05 to 3.0% by weight insoluble fruit fiber being citrus fiber;
(b) from 50.0% to 95% by weight water;
(c) from 5.0 to 40.0% by weight of a flavor base, which is a fruit-based product, vegetable-based product or a mixture thereof,
wherein the insoluble fruit fiber is fiber added in addition to naturally occurring fiber found in the flavor base and the tomato ketchup comprises less than about 5.0% by weight oil.

In a second aspect, the present invention is directed to a method for making the tomato ketchup in the first aspect of this invention.

Insoluble fiber means fiber suitable for human consumption and not water soluble whereby the same is provided as an additive to the tomato ketchup.

Soluble fiber means a fiber suitable for human consumption and water soluble whereby the same is an additive to the food composition. Neither the insoluble fiber nor the soluble fiber are meant to include the fibers normally supplied in the flavor base.

Substantially free of carbohydrates means less than about 20.0%, and preferably, less than about 15.0%, and most preferably, less than about 10.0% by weight of carbohydrate based on total weight of the tomato ketchup.

Emulsion, as used herein, means a suspension of one liquid in a second immiscible liquid wherein the emulsion does not show visible phase separation for at least about 1.5 hours to about 7.0 days at room temperature.

Flavor base means the base of the tomato ketchup that is responsible for the identification of the composition, for example, tomato paste for ketchup.

Solids, as used herein, include pulp, insoluble particles, seeds, skins, fibers and/or pectin natural found in the fruit-based or vegetable-based product (as a result cf processing the precursor fruit or vegetable).

Excellent rheological properties means having a viscosity and/or Bostwick consistency consistent with that of an identical product with conventional carbohydrate levels.

### DETAILED DESCRIPTION OF THE PREFERRED EMBODIMENTS

The insoluble fibers used in this invention are found in citrus fruits Preferred insoluble fibers suitable for use in this invention can be recovered from lemons, limes, oranges, grapefruits or mixtures thereof. The tomato ketchup of this invention comprises from about 0.05 to about 3.0%, and preferably, from about 0.15 to about 2.0%, and most preferably, from about 0.2 to about 0.75% by weight insoluble fruit fibers, based on total weight of the tomato ketchup, and including all ranges subsumed therein. Such insoluble fibers are commercially available from suppliers like Herbstreith & Fox under the Herbacel name. These insoluble fibers typically have (as supplied) lengths from about 25 to about 400 microns, and preferably, from about 50 to 185 microns, and most preferably, from about 100 to about 165 microns, including all ranges subsumed therein. The widths of such fibers are typically between about 3.0 to about 20.0 microns, and preferably, from about 5.0 to about 10.0 microns.

The scluble fibers suitable for optional, yet often preferred, use in this invention include those generally classified as thickening agents or gums. Illustrative examples of the types of gums suitable for use in this invention include xanthan gum, pectin, locust bean gum, guar gum, gellan gum, gum ghatti, modified gum ghatti, tragacanth gum, carrageenan, as well as mixtures thereof. Thickening agents derived from cellulose may also be employed and they include carboxymethylcellulose, sodium carboxymethylcellulose, and mixtures of these polymers, either alone or in combination with the above-identified gums. Typically, when soluble fibers are used, such fibers make up from about 0.05 to about 1.0%, and preferably, from about 0.1 to about 0.75%, and most preferably, from about 0.125 to about 0.35% by weight of the total weight of the food composition, including all ranges subsumed therein.

There is no limitation with respect to the size (i.e., dimensions) of the soluble fibers other than that they are a size suitable for food compositions made for human consumption. Typically, however, the soluble fibers are of a size that is substantially similar to the size of the insoluble fibers.

In a preferred embodiment, and when soluble fibers are used, the weight ratio of insoluble to soluble fibers used in the tomato ketchup is from about 1:1 to about 4:1. In a more preferred embodiment, the weight percent of insoluble fibers is from about 1.25 to about 3.5 times, and most preferably, from about 1-5 to about 3.0 times, greater than the weight percent of soluble fibers used in the tomato ketchup, based on total weight of the tomato ketchup and including all ranges subsumed therein.

Usually, the flavor base is from about 0.0 to about 97.0% by weight water, based on total weight of the flavor base. In a preferred embodiment, the flavor base is not oil (like soybean oil) and comprises from about 3.0 to about 85.0% by weight water, based on total weight of the flavor base. In a most preferred embodiment, the flavor base comprises from about 45.0 to about 80.0% by weight water, based on total weight of the flavor base and including all ranges subsumed therein.

When the tomato ketchup does, however, comprise oil, the tomato ketchup typically comprises less than about 5.0% by weight oil, and preferably, from about 0.1 to less than about 5.0% by weight oil based on total weight of the tomato ketchup. The oil suitable for use in the tomato ketchup is often a liquid at ambient temperature and can be an oil like avocado, mustard, coconut, cottonseed, fish, flaxseed, grape, olive, palm, peanut, rapeseed, safflower, sesame, soybean, sunflower, mixtures thereof or the like.

Other types of oils which may be used in this invention are solid at ambient temperature. Illustrative examples of the oils which are solid at room temperature and suitable for optional use in this invention include, without limitation, butter fat, chocolate fat, chicken fat, mixtures thereof and the like.

If oil is employed as a portion of the flavor base, the tomato ketchup of this invention can be an emulsion but is preferably not an emulsion, as defined herein. If and when an emulsion is desired, conventional emulsifiers, like the food suitable emulsifiers having an HLB of greater than about 8.0 to about 18.0 can be used.

Illustrative examples of the emulsifier suitable for use in this invention include, without limitation, PEG 20 tristearate, PEG 20 trioleate, PEG 20 monostearate, PEG 20 monooleate, PEG 20 monopalmitate and PEG 20 monolaurate sorbitan, derivatives thereof, mixtures thereof and the like, also made available by ICI Surfactants under the names Tween on Span. The preferred emulsifier employable in this invention is, however, a protein, like fruit, vegetable, milk (e.g., whey) or soy protein, or mixtures thereof. Another preferred protein suitable for use in this invention is phospholipoprotein, and especially, egg yolk derived phospholipoprotein modified with phospholipase A as disclosed in U.S. Patent No. 5,028,447, the disclosure of which is incorporated herein by reference. If used, the emulsifier often makes up from about 0.1 to about 10.0% by weight of the total weight of the tomato ketchup, based on total weight of the tomato ketchup and including all ranges subsumed therein.

The flavor base used in the tomato ketchup of the present invention is a tomato-based product. Typically, such a product (e.g., paste, puree or concentrate, juice) comprises from about 4.5% to about 33.0% by weight solids (as the case may be), based on total weight of the product, including all ranges subsumed therein.

The tomato-based product usually has from about 27.0 to about 33.0% by weight solids when a paste and from about 8.0 to about 26.0% by weight solids when a puree or concentrate (based on total weight of the product). When the tomato-based product is a juice, it typically comprises from about 4.5 to less than about 8.0% by weight solids, based on total weight of the product.

The amount of flavor base employed in the tomato ketchup of the present invention is from about 5.0% to about 40.0%, and preferably, from about 10.0% to about 35.0%, and most preferably, from about 15.0% to about 25.0% by weight flavor base, based on total weight of the tomato ketchup and including all ranges subsumed therein.

In an especially preferred embodiment, the flavor base employed is a tomato paste (preferably hot break) comprising from about 28.0% to about 32.0% by weight solids, whereby at least about 15.0% by weight of the tomato ketchup is flavor base. In yet another especially preferred embodiment the tomato ketchup is a tomato ketchup with visually discernible insoluble particles that cannot be detected (i.e., individually felt) in the mouth of the consumer.

When making the tomato ketchup of the present invention, the ingredients (e.g., insoluble fiber, fiber and flavor base) may be added, in no particular order, to a mixing vessel and stirred under moderate shear (typically at ambient temperature and atmospheric pressure) to produce a homogeneous mixture. The homogeneous mixture may optionally be thermally processed by heating the same from about 90 to about 98°C for about 1.0 minute to about 6.0 minutes. Also, the homogeneous mixture (thermally processed or not) can optionally be milled in order to reduce particle sizes and/or optionally de-aerated. The homogeneous mixture is, however, preferably homogenized to produce the desired tomato ketchup of this invention.

It is particularly noted that homogenization is typically carried out under pressures from about 35.0 to about 650.0 bar, and preferably, from about 100.0 to about 600.0 bar, and most preferably, from about 150.0 to about 550.0 bar, including all ranges subsumed therein. Typically, such a homogenization step is carried out at a temperature from about 15°C to about 95°C (preferably about 70°C to about 75°C) to produce a tomato ketchup that displays rheological properties substantially the same as the same type of product having the typical or conventional amount of carbohydrate. Therefore, it is expected that the tomato ketchup of the present invention will have a Bostwick consistency from about 2.5 to 5.0, and therefore, unexpectedly consistent with that of full carbohydrate ketchups, whereby the Bostwick consistency is taken on a CSC Cenco-Bostwick Consistometer (e.g., Fisher Scientific No. 15-347-50) at a temperature of about 20°C, for 30 seconds and taken to the nearest 0.1 cm.

The tomato ketchup of the present invention may be combined with optional additives. Preferred optional additives which may be employed in the tomato ketchup of the present invention include taste enhancers, acidulants, chocolate, nut paste, salt (including sodium and potassium chloride) spices and seasonings, vitamins, artificial flavors and colors, preservatives, antioxidants, chelators, meat like ham and bacon bits or particulates, buffering agents, mixtures thereof and the like. Such optional additives, when used, collectively, do not make up more than about 30.0% by weight of the total weight of the ketchup.

The preferred taste enhancer suitable for use in the invention is monosodium glutamate. Acidulants suitable for use in this invention include, for example, vinegar, acetic acid, citric acid, hydrochloric acid, lactic acid, malic acid, phosphoric acid, glucono-delta-lactone, mixtures thereof and the like. Often, enough acidulant is added so that the pH of the tomato ketchup may be maintained from about 2.5 to about 6.0, and preferably, from about 3.0 tc about 4.0.

The preferred preservatives suitable for use in this invention include sodium benzoate, potassium benzoate, potassium sorbate, sorbic acid, benzoic acid, mixtures thereof and the like. Anti-oxidants suitable for use in this invention include a tocopherol, ascorbic acid, ascorbyl palmitate, tertiary-butyl hydroquinone, mixtures thereof and the like. Chelators suitable fcr use in this invention include EDTA and its salts, sodium tripolyphosphate, sodium carbonate, potassium carbonate, mixtures thereof and the like.

Still other additives which may be optionally added to the food products of this invention include protein sources and sweeteners. The former include caseinate and skimmed milk powder and the latter include sucralose, saccharin, aspartame, mixtures thereof and the like.

Water typically makes up the balance of the tomato ketchup of this invention and it should be understood that water may be provided to the ketchup as an additive, with another ingredient or both. Moreover, water makes up from about 50.0 to about 95.0% by weight of the total weight of the tomato ketchup, including all ranges subsumed therein.

The packaging for the tomato ketchup of this invention is often a glass or plastic jar, food grade sachet or squeezable plastic bottle. Sachets are preferred for food service applications, and a plastic bottle is preferred for domestic use.

In an especially preferred embodiment, the tomato ketchup of the present invention is a tomato ketchup in a plastic squeeze bottle wherein when about 15.0 to about 25.0 grams of the tomato ketchup are consumed by a consumer, only about 1.0 gram of carbohydrate is provided in the ketchup.

The examples which follow are provided to facilitate an understanding of the present invention. The examples are not intended to limit the scope of the claims.

### Example 1

Food compositions were prepared by mixing the following ingredients under moderate shear in a kettle.

| Ingredient | Percent by Weight |
|---|---|
| Hot Break Tomato Paste | 18.0 - 22.0 |
| Artificial Sweetener | 0.02 - 0.04 |
| Vinegar | 7.0 - 8.0 |
| NaCl | 2.0 - 3.0 |
| Spices-to-Taste | 0.20 - 0.27 |
| Xanthan gum | 0.14 - 0.21 |
| Citrus fiber | 0.25 - 0.50 |
| Citric acid | 0.06 - 0.07 |
| Potassium chloride | 0.11 - 0.13 |
| Monosodium glutamate | 0.06 - 0.0.7 |
| Potassium sorbate | 0.10 - 0.12 |
| Added water | 67.0 - 69.0 |

The mixing occurred at ambient temperature for about five minutes and the resulting mixtures were heated to about 90 to 95°C to produce thermally processed low-carbohydrate comprising tomato mixtures. The tomato mixtures were homogenized (about 200 bar) at temperatures at about 80°C to 90°C. While hot, the resulting low-carbohydrate comprising ketchups were filled into standard 18 oz. squeezable plastic bottles.

### Example 2

The food compositions of Example 2 were made via a process that was substantially similar to the process described in Example 1, except that about 0.4 to about 0.6 percent by weight of insoluble tomato fiber was added in lieu of about 0.4 to about 0.6 percent by weight water. The resulting food compositions were low-carbohydrate comprising tomato ketchup.

### Example 3

The low carbohydrate comprising tomato ketchups of Examples 1 and 2 were visually analyzed and tasted after cooling. The ketchups, unexpectedly, displayed no syneresis and had the appearance of conventional full carbohydrate comprising ketchups. When the ketchups were applied to hot beef patties, they were stable and displayed no signs of, composition breakdown. More importantly, the ketchups had the taste and mouthfeel consistent with the taste and mouthfeel of typical leading ketchup brands, like Heinz Ketchup made available by H.J. Heinz Co.

## Claims

1. A tomato ketchup, comprising less than 20% by weight carbohydrate ketchup comprising:
(a) from 0.05 to 3.0% by weight insoluble fruit fiber being citrus fiber;
(b) from 50.0% to 95% by weight water;
(c) from 5.0 to 40.0% by weight of a flavor base, which is a fruit-based product, vegetable-based product or a mixture thereof,
wherein the insoluble fruit fiber is fiber added in addition to naturally occurring fiber found in the flavor base and the tomato ketchup comprises less than about 5.0% by weight oil.

2. The food composition according to claim 1 wherein the tomato ketchup further comprises soluble fiber.

3. The tomato ketchup according to claim 8 wherein the insoluble fiber and soluble fiber are at a weight ratio from about 1:1 to about 4:1, respectively.

4. The tomato ketchup according to claim 2 or 3 wherein the soluble fiber is xanthan gum, guar gum, gellan gum, gum ghatti, modified gum ghatti, modified gum ghatti, tragacanth gum, carrageenan, carboxymethylcellulose, sodium carboxymethylcellulose or a mixture thereof.

5. The tomato ketchup according to claim 1 wherein the flavor base is a fruit-based product, a vegetable-based product or a mixture thereof, and the fruit-based product and vegetable-based product comprise from about 4.5 percent to about 33.0 percent by weight solids.

6. The tomato ketchup according to claim 1 wherein the flavor base is tomato-based product and the tomato ketchup is a tomato ketchup with about 1.0 gram of carbohydrate in about a 15.0 to about 25.0 gram serving, said ketchup having a Bostwick consistency (as defined herein) of about 2.5 to about 5.0.

7. The tomato ketchup according to claim 1, wherein the flavor base contains 0.0-97% by weight of water.

8. A method for making a tomato ketchup according to any of claims 2-7 comprising, in no particular order, the steps of:
combining insoluble fiber, soluble fiber, water and flavor base to produce a mixture; and
homogenizing the mixture wherein the insoluble fiber and the soluble fiber are at a weight ratio from about 1:1 to about 4:1.

9. The method for making a food composition according to claim 8, wherein the flavor base comprises tomato.

10. The method for making a tomato ketchup according to claim 9, wherein the tomato ketchup has a Bostwick consistency (as defined herein) of about 2.5 to about 5.0.

11. The method for making a tomato ketchup according to claim 10, wherein the tomato ketchup has less than about 20.0 percent by weight carbohydrate.

## Patentansprüche

1. Tomaten-Ketchup, das weniger als 20 Gew.-% Kohlenhydrat umfasst, wobei das Ketchup umfasst:
(a) 0,05 bis 3,0 Gew.-% unlösliche Fruchtfaser, die Citrusfaser ist;
(b) 50,0 bis 95 Gew.-% Wasser;
(c) 5,0 bis 40,0 Gew.-% Aromagrundlage, die ein Frucht-basiertes Produkt, ein Gemüse-basiertes Produkt oder ein Gemisch davon ist,
wobei die unlösliche Fruchtfaser Faser ist, die zusätzlich zu natürlich vorkommender Faser, die in der Aromagrundlage gefunden wird, zugesetzt wird, und das Tomaten-Ketchup weniger als etwa 5,0 Gew.-% Öl umfasst.

2. Nahrungsmittelzusammensetzung gemäß Anspruch 1, wobei das Tomaten-Ketchup außerdem lösliche Faser umfasst.

3. Tomaten-Ketchup gemäß Anspruch 8, wobei die unlösliche Faser und die lösliche Faser in einem Gewichtsverhältnis von etwa 1:1 bis etwa 4:1 sind.

4. Tomaten-Ketchup gemäß Anspruch 2 oder 3, wobei die lösliche Faser Xanthangummi, Guargummi, Gellangummi, Ghattiharz, modifiziertes Ghattiharz, modifiziertes Ghattiharz, Tragacanthgummi, Carrageenan, Carboxymethylcellulose, Natriumcarboxymethylcellulose oder ein Gemisch davon ist.

5. Tomaten-Ketchup gemäß Anspruch 1, wobei die Aromagrundlage ein Frucht-basiertes Produkt, ein Gemüse-basiertes Produkt oder ein Gemisch davon ist und das Frucht-basierte Produkt und das Gemüse-basierte Produkt etwa 4,5 Gew.-% bis etwa 33,0 Gew.-% Feststoffe umfassen.

6. Tomaten-Ketchup gemäß Anspruch 1, wobei die Aromagrundlage ein Produkt auf Tomatenbasis ist und das Tomaten-Ketchup ein Tomaten-Ketchup mit etwa 1,0 g Kohlenhydrat in einer Portion mit etwa 15,0 bis etwa 25,0 g ist, wobei das Ketchup eine Bostwick-Konsistenz (wie sie hierin definiert ist) von etwa 2,5 bis etwa 5,0 hat.

7. Tomaten-Ketchup gemäß Anspruch 1, wobei die Aromagrundlage 0,0-97 Gew.-% Wasser enthält.

8. Verfahren zur Herstellung eines Tomaten-Ketchups gemäß einem der Ansprüche 2-7, umfassend, in keiner bestimmten Reihenfolge, die Schritte:
Kombinieren unlöslicher Faser, löslicher Faser, Wasser und einer Aromagrundlage unter Herstellung eines Gemisches und
Homogenisieren des Gemisches, in dem die unlösliche Faser und die lösliche Faser in einem Gewichtsverhältnis von etwa 1:1 bis etwa 4:1 sind.

9. Verfahren zur Herstellung einer Nahrungsmittelzusammensetzung gemäß Anspruch 8, wobei die Aromagrundlage Tomate umfasst.

10. Verfahren zur Herstellung eines Tomaten-Ketchups gemäß Anspruch 9, wobei das Tomaten-Ketchup eine Bostwick-Konsistenz (wie sie hierin definiert ist) von etwa 2,5 bis etwa 5,0 hat.

11. Verfahren zur Herstellung eines Tomaten-Ketchups gemäß Anspruch 10, wobei das Tomaten-Ketchup weniger als etwa 20,0 Gew.-% Kohlenhydrat hat.

## Revendications

1. Ketchup à la tomate comprenant moins de 20 % en poids de glucide, ledit ketchup comprenant :
(a) de 0,05 à 3,0 % en poids de fibre alimentaire insoluble d'origine fruitière sous forme de fibre d'agrumes ;
(b) de 50,0 à 95 % en poids d'eau ;
(c) de 5,0 à 40,0 % en poids d'une base aromatisante, qui est un produit à base de fruits, un produit à base de légumes ou un mélange des deux ;
dans lequel la fibre alimentaire insoluble d'origine fruitière est une fibre ajoutée en plus de la fibre naturelle présente dans la base aromatisante et le ketchup à la tomate comprend moins d'environ 5,0 % en poids d'huile.

2. Composition alimentaire selon la revendication 1, dans laquelle le ketchup à la tomate comprend, en outre, une fibre soluble.

3. Ketchup à la tomate selon la revendication 8, dans lequel la fibre insoluble et la fibre soluble sont dans un rapport en poids d'environ 1 : 1 à environ 4:1, respectivement.

4. Ketchup à la tomate selon les revendications 2 ou 3, dans lequel la fibre soluble est la gomme xanthane, la gomme guar, la gomme gellane, la gomme ghatti, la gomme ghatti modifiée, la gomme adragante, la carraghénine, la carboxyméthylcellulose, la carboxy-méthylcellulose sodique ou un mélange de celles-ci.

5. Ketchup à la tomate selon la revendication 1, dans lequel la base aromatisante est un produit à base de fruits, un produit à base de légumes ou un mélange des deux, et le produit à base de fruits et le produit à base de légumes comprennent d'environ 4,5 à environ 33,0 % en poids de fractions solides.

6. Ketchup à la tomate selon la revendication 1, dans lequel la base aromatisante est un produit à base de tomates et le ketchup à la tomate est un ketchup à la tomate contenant environ 1,0 gramme de glucide dans une portion d'environ 15,0 à environ 25,0 grammes, ledit ketchup ayant une consistance de Bostwick (telle que définie dans la présente) d'environ 2,5 à environ 5,0.

7. Ketchup à la tomate selon la revendication 1, dans lequel la base aromatisante contient de 0,0 à 97 % en poids d'eau.

8. Procédé de préparation d'un ketchup à la tomate selon l'une quelconque des revendications 2 à 7 comprenant, sans ordre particulier, les étapes consistant à :
combiner la fibre insoluble, la fibre soluble, l'eau et une base aromatisante pour obtenir un mélange ; et
homogénéiser le mélange, dans lequel la fibre insoluble et la fibre soluble sont dans un rapport en poids d'environ 1:1 à environ 4:1.

9. Procédé de préparation d'une composition alimentaire selon la revendication 8, dans lequel la base aromatisante comprend de la tomate.

10. Procédé de préparation d'un ketchup à la tomate selon la revendication 9, dans lequel le ketchup à la tomate a une consistance de Bostwick (telle que définie dans la présente) d'environ 2,5 à environ 5,0.

11. Procédé de préparation d'un ketchup à la tomate selon la revendication 10, dans lequel le ketchup à la tomate contient moins d'environ 20,0 % en poids de glucide.
